# DEMANDE DE BREVET EUROPEEN

(11) **EP 4 368 323 A1**
(43) Date de publication de la demande: **15.05.2024**
(21) Numéro de dépôt: 23198093.9
(22) Date de dépôt: 18.09.2023
(51) Int. Cl.: B23D 59/00, B28D 1/04

(54) **OUTIL A MOTEUR PORTABLE**

(30) Priorité: 09.11.2022 FR 2211682
(71) Demandeur: Illinois Tool Works Inc., Glenview IL 60025 (US)
(72) Inventeur: TOURNIER, Ludovic, Glenview, 60025 (US); MESANA, Florian, Glenview, 60025 (US)
(74) Mandataire: HGF

(57) **Abrégé**

L'invention concerne un outil à moteur portable (101) comprenant un moyen d'engagement de surface de travail (102) et un projecteur (103) configuré pour projeter, en utilisation, au moins une indication visuelle (104) sur un substrat (105) sur lequel le moyen d'engagement de surface de travail (102) est placé. Au moins une des indications visuelles (104) est représentative d'un paramètre opérationnel de l'outil à moteur portable (101) ou d'une instruction s'y rapportant.

## Description

### Domaine technique de l'invention

La présente invention concerne de manière générale un outil à moteur portable. Plus spécifiquement, bien que non exclusivement, la présente invention concerne un outil à moteur portable qui comprend un projecteur.

### Arrière-plan technique

Il est connu de fournir un outil à moteur portable qui incorpore un projecteur pour projeter une ligne pour guider le fonctionnement de l'outil. Par exemple, US2006176682 divulgue un outil à moteur portable sous la forme d'une perceuse, qui comprend un projecteur pour projeter une ligne sur une pièce à usiner afin de guider l'opération de perçage. De même, DE102006061001 divulgue un outil à moteur portable sous la forme d'une scie à main, qui comprend un projecteur pour projeter une ligne sur une pièce à usiner afin de guider l'opération de coupe.

### Résumé de l'invention

L'invention vise à fournir un outil à moteur portable amélioré, en particulier un outil capable d'avertir un utilisateur d'un paramètre opérationnel inhabituel.

L'invention concerne un outil à moteur portable comprenant un moyen de projection pour projeter, en utilisation, au moins une indication visuelle sur un substrat devant être travaillé par l'outil, dans lequel au moins une des indications visuelles est représentative d'un paramètre opérationnel de l'outil à moteur portable ou d'une instruction s'y rapportant.

L'outil à moteur portable peut comprendre un moyen d'engagement de surface de travail. Le moyen de projection peut être configuré pour projeter, en utilisation, l'au moins une indication visuelle sur un substrat sur lequel le moyen d'engagement de surface de travail est placé.

L'invention concerne également un outil à moteur portable comprenant un moyen d'engagement de surface de travail et un moyen de projection configuré pour projeter, en utilisation, au moins une indication visuelle sur un substrat sur lequel le moyen d'engagement de surface de travail est placé, dans lequel au moins une des indications visuelles est représentative d'un paramètre opérationnel de l'outil à moteur portable ou d'une instruction s'y rapportant.

Le moyen de projection peut comprendre un projecteur. L'outil ou le moyen de projection peut comprendre un moyen de commande, par exemple un contrôleur. Le moyen de commande peut être apte à déterminer quand l'au moins une indication visuelle doit être projetée sur le substrat. Le moyen de commande peut comprendre un processeur et/ou une mémoire, par exemple à laquelle le processeur est connecté de manière opérationnelle. La mémoire peut comprendre un programme informatique enregistré sur celle-ci, qui peut être configuré pour commander le moyen de projection. L'outil peut comprendre un ou plusieurs capteurs, tels qu'au moins un capteur de consommation d'énergie et/ou au moins un capteur de force et/ou au moins un capteur de mouvement. Le ou les capteurs peuvent être connectés de manière opérationnelle au moyen de commande, par exemple pour mesurer ou déterminer ou estimer le paramètre opérationnel.

Le moyen de projection peut être configuré pour projeter une indication visuelle sur le substrat lorsque le paramètre opérationnel est en dehors d'une plage prédéterminée. L'indication visuelle peut comprendre le clignotement d'une projection ou d'un faisceau projeté. Le projecteur peut être configuré pour faire varier la fréquence du clignotement, par exemple en fonction de la différence entre le paramètre opérationnel et la plage prédéterminée. L'indication visuelle peut comprendre le changement de la luminosité ou de la couleur d'une projection ou d'un faisceau projeté. Le projecteur peut être configuré pour faire varier la luminosité ou la couleur, par exemple en fonction de la différence entre le paramètre opérationnel et la plage prédéterminée.

Le moyen de projection peut être configuré pour fonctionner dans un état normal. Dans l'état normal, le moyen de projection peut être configuré pour projeter une indication visuelle sur le substrat représentative du paramètre opérationnel étant dans la ou une plage prédéterminée.

Le moyen de projection peut être configuré pour fonctionner dans un état d'avertissement. Dans l'état d'avertissement, le moyen de projection peut être configuré pour projeter l'avertissement visuel sur le substrat. Dans l'état d'avertissement, le moyen de projection peut être configuré pour projeter une indication visuelle sur le substrat lorsque le paramètre opérationnel est en dehors d'une plage prédéterminée.

Le moyen de projection peut être configuré pour projeter un premier avertissement visuel, par exemple lorsque le paramètre opérationnel est dans une première plage prédéterminée. Le moyen de projection peut être configuré pour projeter le premier avertissement visuel dans un premier état d'avertissement. Le moyen de projection peut être configuré pour projeter un deuxième avertissement visuel, par exemple lorsque le paramètre opérationnel se trouve dans une deuxième plage prédéterminée. Le moyen de projection peut être configuré pour projeter le deuxième avertissement visuel dans un deuxième état d'avertissement.

L'outil à moteur portable peut comprendre un outil de coupe. Le moyen de projection peut être configuré pour projeter un indicateur de guidage. L'indicateur de guidage peut être pour guider le mouvement de l'outil de coupe par un utilisateur.

L'indicateur de guidage peut comprendre une ligne de guidage, qui peut être alignée avec un disque de coupe, par exemple de l'outil de coupe.

L'indicateur de guidage peut être projeté de manière continue dans l'état normal. L'indicateur de guidage peut être projeté de manière intermittente dans l'état d'avertissement, par exemple afin de fournir l'avertissement visuel. L'avertissement visuel peut comprendre une projection intermittente de l'indicateur de guidage.

L'avertissement visuel peut comprendre un changement de luminosité et/ou de couleur de l'indicateur de guidage, par exemple dans l'état d'avertissement.

Le paramètre opérationnel peut être indicatif d'une force appliquée par un utilisateur. Cette force peut être mesurée, déterminée ou estimée par un ou plusieurs capteurs, tels que des capteurs de force, ou peut être déduite d'une consommation d'énergie du moteur.

Le paramètre opérationnel peut être un mouvement de l'indicateur de guidage indicatif d'un écart par rapport à un chemin de coupe cible. Ce mouvement peut être mesuré, déterminé ou estimé par un capteur de déplacement, qui peut être incorporé dans les moyens de projection.

Le paramètre opérationnel peut être indicatif d'un disque usé. Le paramètre opérationnel peut comprendre une vitesse de déplacement, par exemple inférieure à un seuil prédéterminé. Cette vitesse de mouvement peut être mesurée, déterminée ou estimée par un capteur de déplacement, qui peut être incorporé dans le moyen de projection.

Le paramètre opérationnel peut être indicatif d'un défaut de l'outil. Ce défaut d'outil peut être mesuré, déterminé ou estimé par un ou plusieurs capteurs, tels que des capteurs de température ou des capteurs de force, ou peut être déduit d'une consommation d'énergie du moteur.

Le moyen d'engagement de surface de travail peut comprendre un chariot à fond plat. Le moyen d'engagement de la surface de travail peut comprendre une ou plusieurs roues, par exemple pour permettre à l'outil de rouler le long du substrat.

Pour éviter tout doute, toutes les caractéristiques décrites ici s'appliquent également à tout aspect de l'invention.

Dans le cadre de la présente demande, il est expressément prévu que les divers aspects, modes de réalisation, exemples et alternatives exposés dans les paragraphes précédents, dans les revendications et/ou dans la description et les dessins suivants, et en particulier les caractéristiques individuelles de ceux-ci, peuvent être pris indépendamment ou dans n'importe quelle combinaison. En d'autres termes, tous les modes de réalisation et/ou les caractéristiques de tout mode de réalisation peuvent être combinés de n'importe quelle manière, à moins que ces caractéristiques ne soient incompatibles.

Pour éviter toute ambiguïté, les termes "peut", "et/ou", "par exemple" et tout autre terme similaire utilisés dans le présent document doivent être interprétés comme non limitatifs, de sorte que toute caractéristique ainsi décrite ne doit pas nécessairement être présente. En effet, toute combinaison de caractéristiques optionnelles est expressément envisagée sans s'écarter de la portée de l'invention, que celles-ci soient ou non expressément revendiquées. Le demandeur se réserve le droit de modifier toute revendication déposée à l'origine ou de déposer toute nouvelle revendication en conséquence, y compris le droit de modifier toute revendication déposée à l'origine pour qu'elle dépende de et/ou incorpore toute caractéristique de toute autre revendication bien qu'elle ne soit pas revendiquée à l'origine de cette manière.

### Brève description des figures

D'autres caractéristiques et avantages de l'invention apparaîtront au cours de la lecture de la description détaillée qui va suivre pour la compréhension de laquelle on se reportera aux dessins annexés dans lesquels :

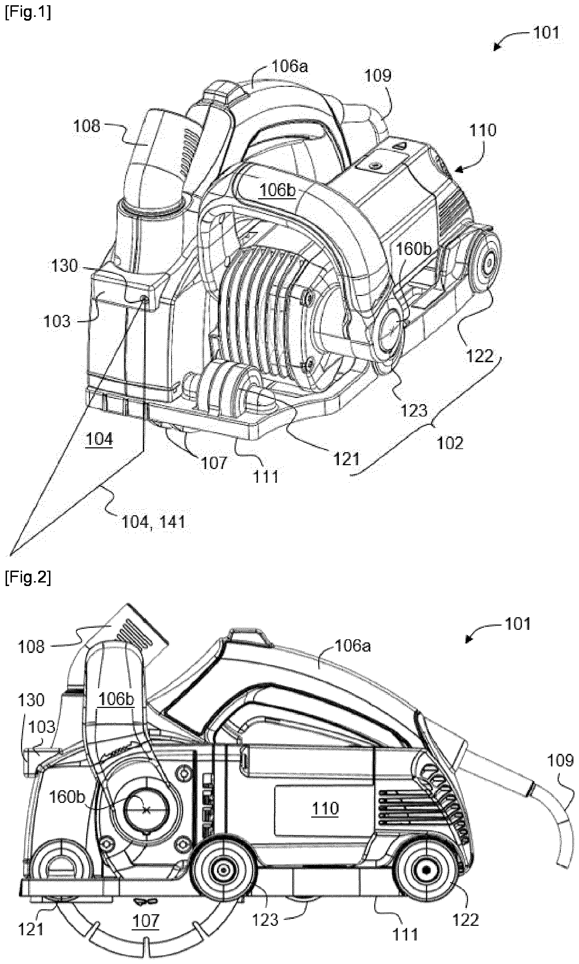

[Fig. 1] la figure 1 est une vue en perspective d'un outil à moteur portable selon l'invention ;
[Fig. 2] la figure 2 est une vue latérale de l'outil à moteur portable de la figure 1 ;

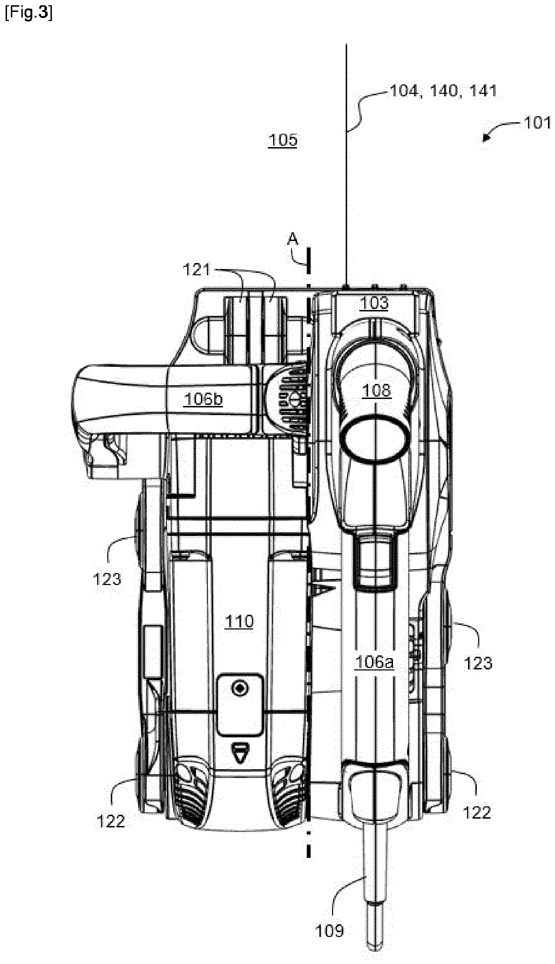

[Fig. 3] la figure 3 est une vue de dessus de l'outil à moteur portable de la figure 1 ;
[Fig. 4] la figure 4 est une vue latérale de l'outil à moteur portable de la figure 1, représenté découpant dans un substrat.

### Description détaillée de l'invention

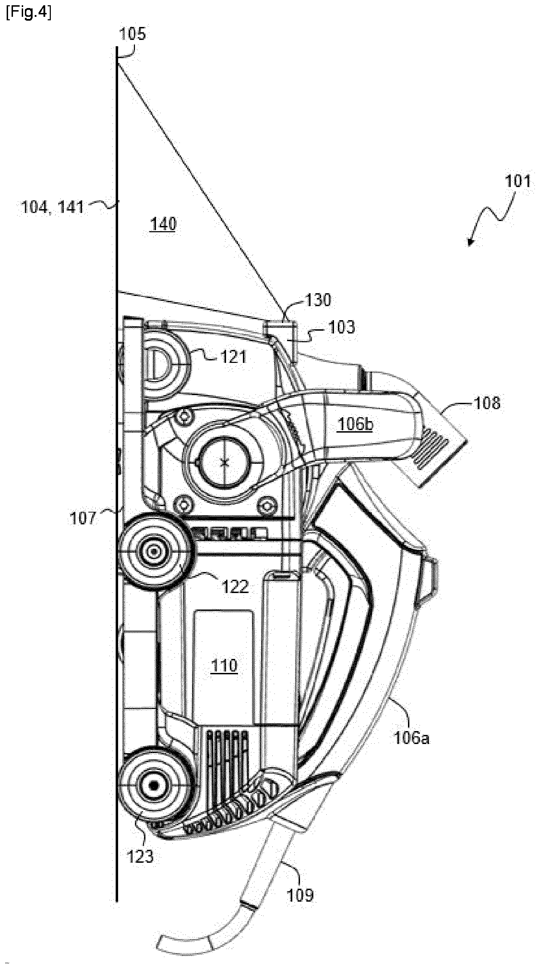

En se référant maintenant aux figures, on peut voir un outil à moteur portable 101 comprenant un moyen d'engagement de surface de travail 102 et un moyen de projection 103 configuré pour projeter, en utilisation, au moins une indication visuelle 104 sur un substrat 105 sur lequel le moyen d'engagement de surface de travail 102 est placé. Dans cet exemple, le substrat 105 est un mur, comme le montre plus clairement la figure 4.

L'outil 101 dans cet exemple est un outil de coupe, plus précisément une rainureuse. L'outil 101 comprend un corps principal 110 avec un axe longitudinal A, une poignée principale 106a et une poignée supérieure 106b faisant toutes deux saillie du haut du corps principal 110. La poignée principale 106a s'étend le long de l'axe longitudinal A pour permettre à un utilisateur de la saisir avec sa main droite et d'appliquer une force contre le substrat et pour pousser l'outil portable 101 vers l'avant. La poignée supérieure 106b se trouve vers l'avant du corps principal 110 et s'étend perpendiculairement à l'axe longitudinal A pour permettre à un utilisateur de la saisir avec sa main gauche afin d'améliorer la manipulation et la manoeuvre de l'outil portable 101. Dans cet exemple, la poignée supérieure 106b est réglable autour d'un axe perpendiculaire à l'axe longitudinal A en appuyant sur un bouton 160b.

L'outil 101 comprend également une paire de disques de coupe 107 qui dépendent du corps principal 110 et qui sont couplés de manière opérationnelle à un moteur électrique (non représenté) monté à l'intérieur du corps principal 110. Les disques de coupe 107 sont espacés l'un de l'autre pour couper une rainure de la manière habituelle. Le corps principal 110 comporte également un capot d'aspirateur entourant les lames 107, qui communiquent avec un tube de sortie 108 destiné à être raccordé à un aspirateur (non représenté). Dans cet exemple, le tube de sortie 108 fait saillie à partir du haut du corps principal 110 à un angle, et peut être tourné à l'intérieur du corps principal 110 pour changer son orientation.

Le moyen d'engagement de la surface de travail 102 se présente sous la forme d'un chariot à fond plat décrivant une surface inférieure 111 du corps principal 110 et trois paires de roues 121, 122, 123 qui dépendent de la surface inférieure 111. La première paire de roues 121 se trouve à l'avant du corps principal 110, partage le même axe et se trouve l'une à côté de l'autre et à côté des disques de coupe 107. Chacune des deuxièmes paires de roues 122 est montée à rotation sur un côté respectif du corps principal 110 à l'arrière du corps principal 110, c'est-à-dire à l'extrémité longitudinale opposée à la première paire de roues 121. Chacune des roues de la troisième paire de roues 123 est montée de manière rotative sur un côté respectif du corps principal 110 entre ses extrémités longitudinales, mais à des emplacements décalés longitudinalement. Ensemble, les six roues espacées 121, 122, 123 fournissent un support roulant stable pour l'outil portable 101.

Dans cet exemple, le moyen de projection 103 est un projecteur logé dans une partie supérieure de l'avant du corps principal 110. Le projecteur 103 comprend un émetteur 130 configuré pour émettre un faisceau laser plan 140 aligné avec le disque de coupe 107 le plus central pour guider l'opération de coupe. Dans un état normal, l'émetteur 130 émet le faisceau plan 140 vers le substrat 105, qui apparaît sous la forme d'une ligne 141 s'étendant depuis l'avant de l'outil 101 et indiquant le chemin de coupe du disque de coupe 107 le plus central.

Toutefois, conformément à la présente invention, le projecteur 103 est également configuré pour projeter sur le substrat 105, dans un état d'avertissement, au moins une indication visuelle 104 représentative d'un paramètre opérationnel de l'outil 101. A cet égard, le projecteur 103 peut comprendre un moyen de commande, par exemple un contrôleur, apte à déterminer quand l'au moins une indication visuelle 104 doit être projetée sur le substrat 105. Dans cet exemple, l'indicateur visuel 104 se présente sous la forme d'une variation de la ligne 141. Plus précisément, cette variation est assurée par une pulsation du faisceau plan 140, entraînant une absence ou un clignotement intermittent de la ligne 141.

Dans cet exemple, l'indication visuelle 104 représente une surcharge de l'outil 101. Une telle surcharge peut se produire, par exemple, lorsque les forces appliquées par l'utilisateur aux poignées 106a, 106b pour pousser l'outil 101 contre et le long du substrat 105 font que la charge sur les disques de coupe 107 dépasse une valeur recommandée. L'homme du métier comprendra que d'autres facteurs, tels que les caractéristiques du substrat 105, contribueront également à une telle condition de surcharge. Une telle surcharge peut, par exemple, être détectée à partir des caractéristiques mesurées de l'alimentation du moteur, qui sont indicatives du couple nécessaire pour maintenir une vitesse de coupe souhaitée des disques de coupe 107. D'autres approches sont également envisagées, qui seront appréciées par l'homme du métier. Comme mentionné ci-dessus, l'indication visuelle 104 peut être fournie par une pulsation du faisceau plan 140, entraînant une absence ou un clignotement intermittent de la ligne 141. Dans un mode de réalisation particulièrement avantageux, la fréquence des pulsations peut augmenter avec l'importance de la surcharge détectée. Par exemple, le moyen de commande du projecteur 103 peut être configuré ou utilisable pour faire clignoter la ligne 141 toutes les secondes afin de fournir une indication visuelle 104 représentative d'une surcharge dans une première plage prédéterminée. Le moyen de commande du projecteur 103 peut être configuré ou utilisable pour faire clignoter la ligne 141 toutes les demi-secondes afin de fournir une indication visuelle 104 représentative d'une surcharge dans une seconde plage prédéterminée. La seconde plage prédéterminée peut représenter une surcharge plus critique que la première plage prédéterminée.

Il est également envisagé que le moyen de commande du projecteur 103 puisse être configuré ou utilisable pour faire clignoter la ligne 141 à une ou plusieurs autres fréquences afin de fournir une indication visuelle 104 représentative d'une surcharge dans une autre plage prédéterminée. Dans certains cas, l'outil 101 peut être configuré pour arrêter la rotation du moteur électrique (non représenté) si la surcharge dépasse un certain seuil prédéterminé. Le moyen de commande du projecteur 103 peut également être configuré ou utilisable pour éteindre le faisceau plan 140 dans une telle situation, ou avant qu'une telle situation ne se produise, afin de fournir une indication que l'outil 101 est sur le point de s'éteindre.

Dans d'autres exemples, la variation de la ligne 141 peut être assurée par un changement d'une autre caractéristique du faisceau plan 140 et de la ligne 141, comme un changement de luminosité et/ou de couleur. L'homme du métier comprendra également que la variation peut être toute combinaison de ces caractéristiques et d'autres.

Dans d'autres exemples, le ou un autre projecteur 103 peut être configuré pour projeter des indices ou des instructions sur le substrat 105. Les indices peuvent comprendre le mot ALERTE ou similaire, par exemple. De même, les instructions peuvent comprendre les mots STOP, par exemple. D'autres indications visuelles 104 sont également envisagées sans sortir du cadre de l'invention.

Par ailleurs, l'invention n'est pas limitée aux rainureuses ou même aux outils de coupe. La présente invention peut être intégrée à tout autre outil électroportatif. Toutefois, l'invention s'est avérée particulièrement utile dans les rainureuses, compte tenu de leur susceptibilité aux surcharges.

Il est également envisagé que l'indication visuelle 104 peut représenter un autre paramètre opérationnel et/ou que cet autre paramètre opérationnel soit en dehors d'une plage prédéterminée.

Par exemple, l'indication visuelle 104 peut représenter un écart par rapport à une trajectoire de coupe cible. Dans de tels exemples, le projecteur 103 peut être dirigé vers une boîtier d'encastrement avec une cellule de réception et une cible, et l'écart peut être détecté par un mouvement d'éloignement de la cible. Alternativement, la déviation peut être détectée simplement par un mouvement angulaire de la ligne 141 ou un capteur de mouvement à l'intérieur de l'outil 101.

Dans d'autres exemples, l'indication visuelle 104 peut indiquer un disque usé ou un défaut de l'outil.

Dans toute la description et les revendications, les mots "comprennent" et "contiennent" et leurs variations signifient "y compris mais non limité à", et ils ne sont pas destinés à (et n'excluent pas) d'autres parties, additifs, composants, entiers ou étapes. Dans toute la description et les revendications de cette spécification, le singulier englobe le pluriel, à moins que le contexte ne l'exige autrement. En particulier, lorsque l'article indéfini est utilisé, la spécification doit être comprise comme envisageant la pluralité ainsi que la singularité, à moins que le contexte n'exige autre chose.

Les caractéristiques, nombres entiers, caractéristiques, composés ou groupes décrits en liaison avec un aspect, une réalisation ou un exemple particulier de l'invention doivent être compris comme étant applicables à tout autre aspect, réalisation ou exemple décrit dans le présent document, sauf incompatibilité avec celui-ci.

L'attention du lecteur est dirigée vers tous les papiers et documents qui sont déposés simultanément ou antérieurement à cette spécification en relation avec cette demande et qui sont ouverts à l'inspection publique avec cette spécification, et le contenu de tous ces papiers et documents est incorporé ici par référence.

## Revendications

1. Outil à moteur portable (101) comprenant un moyen d'engagement de surface de travail (102) et un moyen de projection (103) configuré pour projeter, en utilisation, au moins une indication visuelle (104) sur un substrat (105) sur lequel le moyen d'engagement de surface de travail (102) est placé, dans lequel au moins une des indications visuelles (104) est représentative d'un paramètre opérationnel de l'outil à moteur portable (101) ou d'une instruction s'y rapportant.

2. Outil à moteur portable selon la revendication 1, dans lequel le moyen de projection (103) est configuré pour projeter une indication visuelle (104) sur le substrat (105) lorsque le paramètre opérationnel est en dehors d'une plage prédéterminée.

3. Outil à moteur portable selon la revendication 2, dans lequel le moyen de projection (103) est configuré pour fonctionner dans un état normal, dans lequel il projette une indication visuelle (104) sur le substrat (105) représentative du paramètre opérationnel étant dans la plage prédéterminée, et pour fonctionner dans un état d'avertissement dans lequel il projette l'avertissement visuel sur le substrat (105).

4. Outil à moteur portable selon la revendication 3 comprenant un outil de coupe, dans lequel le moyen de projection (103) est configuré pour projeter un indicateur de guidage pour guider le mouvement de l'outil de coupe par un utilisateur.

5. Outil à moteur portable selon la revendication 4, dans lequel l'indicateur de guidage comprend une ligne de guidage alignée avec un disque de coupe (107).

6. Outil à moteur portable selon la revendication 4 ou la revendication 5, dans lequel l'indicateur de guidage est projeté de manière continue dans l'état normal et est projeté de manière intermittente dans l'état d'avertissement, afin de fournir l'avertissement visuel.

7. Outil à moteur portable selon l'une quelconque des revendications 4 à 6, dans lequel l'avertissement visuel comprend un changement de luminosité et/ou de couleur de l'indicateur de guidage dans l'état d'avertissement.

8. Outil à moteur portable selon l'une quelconque des revendications 2 à 7, dans lequel le paramètre opérationnel est indicatif d'une force appliquée par un utilisateur.

9. Outil à moteur portable selon l'une quelconque des revendications 2 à 7, dans lequel le paramètre opérationnel est un mouvement de l'indicateur de guidage indicatif d'un écart par rapport à un chemin de coupe cible.

10. Outil à moteur portable selon l'une quelconque des revendications 2 à 7, dans lequel le paramètre opérationnel est indicatif d'un disque usé (107).

11. Outil à moteur portable selon l'une quelconque des revendications 2 à 8, dans lequel le paramètre opérationnel comprend une vitesse de déplacement inférieure à un seuil prédéterminé.

12. Outil à moteur portable selon l'une quelconque des revendications précédentes, dans lequel le paramètre opérationnel est indicatif d'un défaut de l'outil.

13. Outil à moteur portable selon l'une quelconque des revendications précédentes, dans lequel le moyen d'engagement de surface de travail comprend un chariot à fond plat.

14. Outil à moteur portable selon l'une quelconque des revendications précédentes, dans lequel le moyen d'engagement de la surface de travail comprend une ou plusieurs roues, par exemple pour permettre à l'outil de rouler le long du substrat.
